# EUROPÄISCHE PATENTSCHRIFT

(11) **EP 2 131 994 B1**
(45) Veröffentlichungstag und Bekanntmachung des Hinweises auf die Patenterteilung: **28.08.2013**
(21) Anmeldenummer: 08717172.4
(22) Anmeldetag: 27.02.2008
(51) Int. Cl.: B23K 26/40, C03B 33/09, H01L 21/48

(54) **VERFAHREN ZUM HERSTELLEN EINES BAUTEILS UNTER VERWENDUNG EINER ASYMMETRISCHEN ENERGIEEINLEITUNG ENTLANG DER TRENN- ODER SOLLBRUCHLINIE**
METHOD FOR PRODUCING A COMPONENT USING ASYMMETRICAL ENERGY INPUT ALONG THE PARTING OR PREDETERMINED BREAKING LINE
PROCÉDÉ DE PRODUCTION D'UN ÉLÉMENT PAR APPORT D'ÉNERGIE ASYMÉTRIQUE LE LONG D'UNE LIGNE DE SÉPARATION OU D'UNE LIGNE DESTINÉE À LA RUPTURE

(30) Priorität: 28.02.2007 DE 102007010126
(43) Veröffentlichungstag der Anmeldung: 16.12.2009
(73) Patentinhaber: CeramTec GmbH, 73207 Plochingen (DE)
(72) Erfinder: KLUGE, Claus Peter, 95195 Röslau (DE); DOHN, Alexander, 96117 Drosendorf (DE); HEMERLE, Michael, 95615 Marktredwitz (DE)
(74) Vertreter: Uppena, Franz
(86) Internationale Anmeldenummer: PCT/EP2008/052365
(87) Internationale Veröffentlichungsnummer: WO 2008/104560

(56) Entgegenhaltungen:
- WO-A1-2006/002168
- DE-A1- 10 327 360
- US-A- 4 606 747
- US-A- 5 609 284
- US-A1- 2004 251 290
- US-B1- 6 420 678

## Beschreibung

Die Erfindung betrifft ein Verfahren zum Herstellen eines Bauteils nach dem Oberbegriff des Anspruchs 1.

Aus der DE 103 27 360 A1 ist ein Verfahren bekannt, bei dem auf wenigstens einer Oberflächenseite einer Keramik mindestens ein Metallbereich aufgebracht wird und nach dem Aufbringen des wenigstens einen Metallbereichs das Metall-Keramik-Substrat entlang zumindest einer Trenn- oder Sollbruchlinie in einem thermischen Behandlungs- oder Verfahrensschritt durch eine Energieeinleitung erhitzt und dann mit einem Kühlmedium schockartig derart abgekühlt wird, dass im Metall-Keramik-Substrat durch diesen Temperaturwechsel eine gezielte Rissbildung oder Materialschwächung entlang der Trenn- oder Sollbruchlinie erfolgt.

Ein Nachteil besteht hierbei darin, dass oftmals keine oder nur eine ungenügende Rissbildung oder Materialschwächung entlang der Trenn- oder Sollbruchlinie erfolgt. Außerdem ist die Streubreite der Brechkräfte unter Serieneinsatzbedingungen unzureichend.

US 6 420 678 B1 als nächstliegender Stand der Technik sich obergriff des Anspruchs 1) beschreibt ein Verfahren zum Herstellen eines Bauteils, bei dem (Verfahren) auf wenigstens einer Oberflächenseite des Bauteils mindestens eine Trenn- oder Sollbruchlinie dadurch erzeugt wird, dass zunächst in einem thermischen Behandlungs- oder Verfahrensschritt die Trenn- oder Sollbruchlinie durch eine Energieeinleitung lokal erhitzt und anschließend mit einem Kühlmedium schockartig derart abgekühlt wird, dass im Bauteil durch diesen Temperaturwechsel eine gezielte Rissbildung oder Materialschwächung entlang der Trenn- oder Sollbruchlinie entsteht.

Der Erfindung liegt die Aufgabe zugrunde, ein derartiges Verfahren so zu verbessern, dass unter allen Umständen eine gewünschte Rissbildung oder Materialschwächung eintritt.

Diese Aufgabe wird efindungsgemäß durch die Merkmale des Anspruchs 1 gelöst.

Dadurch, dass die Energieeinleitung entlang der Trenn- oder Sollbruchlinie an jeder Stelle asymmetrisch erfolgt, wobei jede Stelle der Trenn- und Sollbruchlinie in geeignet kurzen Zeitabständen mit mindestens zwei unterschiedlich starken Energieeinleitungen beaufschlagt wird und so die Energieverteilung an die gewünschte Rissbildung oder Materialschwächung angepasst wird, wobei an jeder Stelle der zu schaffenden Trenn- oder Sollbruchlinie zuerst eine größere Energieeinleitung und hierdurch eine Art Anreißen der Oberfläche erfolgt und die Tiefe der zu schaffenden Trenn- oder Sollbruchlinie danach durch eine schwächere Energieeinleitung erzeugt wird, tritt unter allen Umständen eine gewünschte Rissbildung oder Materialschwächung ein.

Es hat sich überraschend gezeigt, dass an jeder Stelle der zu schaffenden Trenn- oder Sollbruchlinie zuerst eine größere Energieeinleitung erforderlich ist und hierdurch eine Art Anreißen der Oberfläche erfolgt. Die Tiefe der zu schaffenden Trenn- oder Sollbruchlinie wird danach durch eine schwächere Energieeinleitung erzeugt.

Bauteile können beispielsweise aus Keramik, Glas oder Porzellan sein. Grundsätzlich sollten die zu modifizierenden Bauteile aus Materialien bestehen, die die gewählten Energiearten absorbieren, um den Effekt der gezielten Aufheizung zu gewährleisten.

Keramische Bauteile können flächig oder als 3 dimensionale Körper ausgebildet sein.

Keramische Bauteile können beispielsweise mit Metallen oder Kombinationen von Metallen, Polymeren kombiniert vorkommen.

Diese asymmetrische Energieeinleitung kann durch verschiedene Verfahrensschritte erzielt werden.

Bevorzugt wird der Wechsel der Energieeinleitung kontinuierlich oder in Stufen durchgeführt. Hiermit erreicht man einen wesentlich bessere Abstimmung von Energieeintrag und resultierender Trenn- oder Sollbruchstellencharakteristik in Kombination mit den eingesetzten Materialien.

Erfindungsgemäß wird die Energieeinleitung über einen Laser oder eine Infrarotquelle, wie zum Beispiel einer Infrarotlampe, durchgeführt.

In einer ersten Ausführungsform, bei der die Energieeinleitung über ein Linsen-oder Spiegelsystem oder einer Kombination derselben erfolgt wird durch Verstellen des Linsen- oder Spiegelsystems die Energieeinleitung gesteuert.

In einer zweiten Ausführungsform wird die Energieeinleitung mit mindestens zwei Laser oder Infrarotquellen durchgeführt, so dass mindestens ein Zweistrahlverfahren angewendet wird.

In einer erfinderischen Ausführungsform wird die Energieeinleitung durch eine Veränderung der Frequenz und/oder der Wellenlänge der Energieeinleitung gesteuert.

In einer anderen erfinderischen Ausführungsform wird auf die zu schaffende Trenn- oder Sollbruchlinie eine Maske aufgesetzt und die Energieeinleitung wird durch ein Verändern oder Verschieben der Maske gesteuert.

In einer anderen erfinderischen Ausführungsform wird auf dem Bauteil mindestens ein Bereich mit einem Material gleicher oder unterschiedlicher Absorptionsfähigkeit wie das Material des Bauteils selber beschichtet und die Energieeinleitung wird durch das Absorptionsvermögen der Schicht gesteuert wird.

In einer anderen erfinderischen Ausführungsform wird die Energieeinleitung durch gleiche oder unterschiedliche variable Abstände zwischen der zu schaffenden Trenn- oder Sollbruchlinie des Bauteils und der Energiequelle gesteuert.

Eine erfinderische Ausgestaltung ist dadurch gekennzeichnet, dass die Energieeinleitung von einer oder mehreren Seiten auf das Substrat einwirkt.

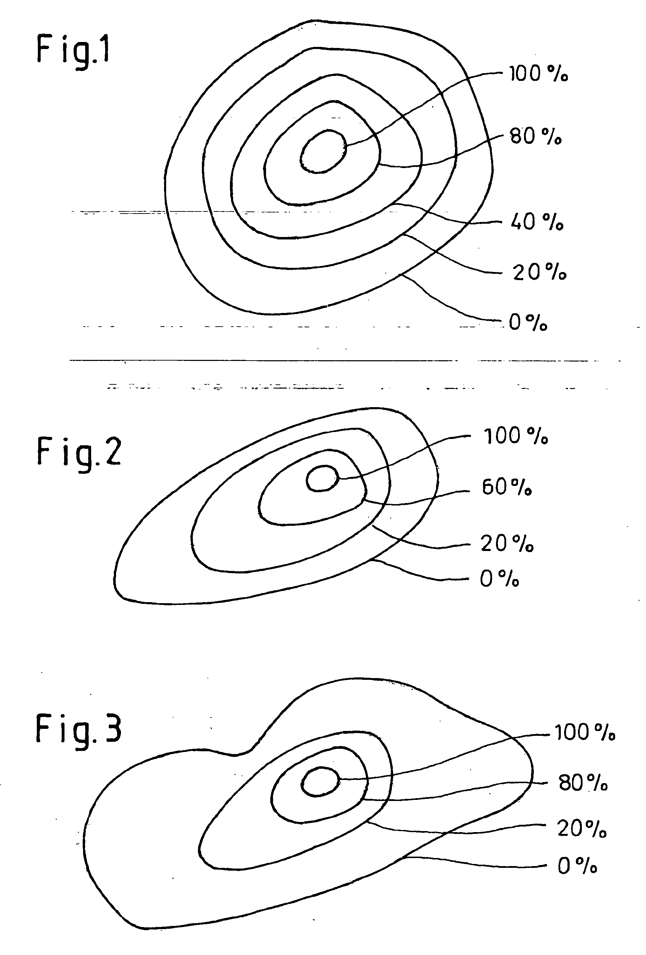

Eine erfinderische Ausgestaltung ist dadurch gekennzeichnet, dass die Energieeinleitung mindestens einer verwendeten Energiequelle symmetrisch oder asymmetrisch oder eine Kombination derselben verteilt ist. Der Vorteil besteht darin, über gezieltes Modifizieren der geometrischen Form der Energieeinleitung bzw. des Brennfleckes eine gewünschte Veränderung des energiebeaufschlagten Bauteiles an der Stelle der Energieeinleitung zu erreichen. In den Figuren 1 bis 3 sind verschiedene Energieeinleitungen in der Form von topographischen Höhenlinien gleicher Energien (in Prozent) dargestellt.

Die Bauteile können durch Trennen, Bohren, Perforieren, Schweißen, Ablation etc behandelt werden.

## Patentansprüche

1. Verfahren zum Herstellen eines Bauteils, bei dem Verfahren auf wenigstens einer Oberflächenseite des Bauteils mindestens eine Trenn- oder Sollbruchlinie dadurch erzeugt wird, dass zunächst in einem thermischen Behandlungs- oder Verfahrensschritt die Trenn- oder Sollbruchlinie durch eine Energieeinleitung lokal erhitzt und anschließend mit einem Kühlmedium schockartig derart abgekühlt wird, dass im Bauteil durch diesen Temperaturwechsel eine gezielte Rissbildung oder Materialschwächung entlang der Trenn- oder Sollbruchlinie entsteht, **dadurch gekennzeichnet, dass** die Energieeinleitung entlang der Trenn- oder Sollbruchlinie an jeder Stelle asymmetrisch erfolgt, wobei jede Stelle der Trenn- und Sollbruchlinie in geeignet kurzen Zeitabständen mit mindestens zwei unterschiedlich starken Energieeinleitungen beaufschlagt wird und so die Energieverteilung an die gewünschte Rissbildung oder Materialschwächung angepasst wird, wobei an jeder Stelle der zu schaffenden Trenn- oder Sollbruchlinie zuerst eine größere Energieeinleitung und hierdurch eine Art Anreißen der Oberfläche erfolgt und die Tiefe der zu schaffenden Trenn- oder Sollbruchlinie danach durch eine schwächere Energieeinleitung erzeugt wird.

2. Verfahren nach Anspruch 1, **dadurch gekennzeichnet, dass** der Wechsel der Energieeinleitung kontinuierlich oder in Stufen durchgeführt wird.

3. Verfahren nach Anspruch 1 oder 2, **dadurch gekennzeichnet, dass** die Energieeinleitung über einen Laser oder eine Infrarotquelle durchgeführt wird.

4. Verfahren nach einem der Ansprüche 1 bis 3, **dadurch gekennzeichnet, dass** die Energieeinleitung über ein Linsen- oder Spiegelsystem oder einer Kombination derselben erfolgt und durch Verstellen des Linsen- oder Spiegelsystem die Energieeinleitung gesteuert wird.

5. Verfahren nach einem der Ansprüche 1 bis 4, **dadurch gekennzeichnet, dass** die Energieeinleitung mit mindestens zwei Laser oder Infrarotquellen durchgeführt wird, so dass mindestens ein Zweistrahlverfahren angewendet wird.

6. Verfahren nach einem der Ansprüche 1 bis 5, **dadurch gekennzeichnet, dass** die Energieeinleitung durch eine Veränderung der Frequenz und/oder der Wellenlänge der Energieeinleitung gesteuert wird.

7. Verfahren nach einem der Ansprüche 1 bis 6, **dadurch gekennzeichnet, dass** auf die zu schaffende Trenn- oder Sollbruchlinie eine Maske aufgesetzt wird und die Energieeinleitung durch ein Verändern oder Verschieben der Maske gesteuert wird.

8. Verfahren nach einem der Ansprüche 1 bis 7, **dadurch gekennzeichnet, dass** auf dem Bauteil mindestens ein Bereich mit einem Material gleicher oder unterschiedlicher Absorptionsfähigkeit wie das Material des Bauteils selber beschichtet wird und die Energieeinleitung durch das Absorptionsvermögen der Schicht gesteuert wird.

9. Verfahren nach einem der Ansprüche 1 bis 8, **dadurch gekennzeichnet, dass** die Energieeinleitung durch gleiche oder unterschiedliche variable Abstände zwischen der zu schaffenden Trenn- oder Sollbruchlinie des Bauteils und der Energiequelle gesteuert wird.

10. Verfahren nach einem der Ansprüche 1 bis 9 **dadurch gekennzeichnet, dass** die Energieeinleitung von einer oder mehreren Seiten auf das Substrat einwirkt.

11. Verfahren nach einem der Ansprüche 1 bis 10, **dadurch gekennzeichnet, dass** die Energieeinleitung mindestens einer verwendeten Energiequelle symmetrisch oder asymmetrisch oder eine Kombination derselben verteilt ist.

## Claims

1. Method for producing a component, in which method at least one parting or predetermined breaking line is produced on at least one surface side of the component in that in the first instance in a thermal treatment or procedural step the parting or predetermined breaking line is heated locally by energy input and subsequently is cooled abruptly by a cooling medium in such a way that in the component as a result of this change in temperature a targeted crack formation or material weakening develops along the parting or predetermined breaking line, **characterised in that** the energy input is effected asymmetrically along the parting or predetermined breaking line at each location, with there being applied at each location of the parting and predetermined breaking line at suitably short intervals in time at least two energy inputs that are of different strengths, and with the energy distribution thus being adapted to the desired crack formation or material weakening, wherein at each location of the parting or predetermined breaking line that is to be created first a greater energy input and as a result a kind of superficial cracking of the surface is effected, and afterwards the depth of the parting or predetermined breaking line that is to be created is produced by means of a weaker energy input.

2. Method according to claim 1, **characterised in that** the change in the energy input is carried out continuously or in stages.

3. Method according to claim 1 or 2, **characterised in that** the energy input is carried out by way of a laser or an infrared source.

4. Method according to one of claims 1 to 3, **characterised in that** the energy input is effected by way of a lens or mirror system or a combination of the same, and the energy input is controlled by adjusting the lens or mirror system.

5. Method according to one of claims 1 to 4, **characterised in that** the energy input is carried out with at least two lasers or infrared sources so that at least one two-beam method is applied.

6. Method according to one of claims 1 to 5, **characterised in that** the energy input is controlled by changing the frequency and/or the wavelength of the energy input.

7. Method according to one of claims 1 to 6, **characterised in that** a mask is placed on the parting or predetermined breaking line that is to be created, and the energy input is controlled by changing or displacing the mask.

8. Method according to one of claims 1 to 7, **characterised in that** on the component at least one region is coated with a material of the same or different absorptive power as or from the material of the component itself, and the energy input is controlled by means of the absorptive capacity of the coating.

9. Method according to one of claims 1 to 8, **characterised in that** the energy input is controlled by the same or different variable distances between the parting or predetermined breaking line of the component that is to be created and the energy source.

10. Method according to one of claims 1 to 9, **characterised in that** the energy input acts on the substrate from one or a plurality of sides.

11. Method according to one of claims 1 to 10, **characterised in that** the energy input of at least one energy source used is distributed in a symmetrical way or in an asymmetrical way or in a way that is a combination of these ways.

## Revendications

1. Procédé de fabrication d'un élément de construction, procédé selon lequel on réalise, sur au moins une surface de l'élément de construction, au moins une ligne de séparation ou ligne destinée à la rupture, par le fait que l'on chauffe d'abord localement, au cours d'une étape de traitement ou de procédé thermique, la ligne de séparation ou ligne destinée à la rupture, par application d'énergie, et ensuite on la refroidit de façon brusque avec un fluide de refroidissement, de telle sorte que ce changement de température crée dans l'élément de construction une fissuration ou un affaiblissement de matériau ciblés le long de la ligne de séparation ou ligne destinée à la rupture, **caractérisé en ce que** l'application d'énergie le long de la ligne de séparation ou ligne destinée à la rupture s'effectue de manière asymétrique à chaque emplacement, sachant que chaque emplacement de la ligne de séparation et destinée à la rupture est soumis, à de brefs intervalles de temps appropriés, à au moins deux applications d'énergie d'intensité différente, et la distribution de l'énergie est ainsi adaptée à la fissuration ou à l'affaiblissement de matériau souhaités, sachant qu'à chaque emplacement de la ligne de séparation ou ligne destinée à rupture devant être créée, s'effectue d'abord une application d'énergie plus importante et de ce fait une sorte de traçage de la surface, et ensuite la profondeur de la ligne de séparation ou ligne destinée à la rupture devant être créée est réalisée par une application d'énergie plus faible.

2. Procédé selon la revendication 1, **caractérisé en ce que** le changement de l'application d'énergie est réalisé de manière continue ou par gradins.

3. Procédé selon la revendication 1 ou 2, **caractérisé en ce que** l'application d'énergie est réalisée au moyen d'un laser ou d'une source infrarouge.

4. Procédé selon l'une des revendications 1 à 3, **caractérisé en ce que** l'application d'énergie s'effectue par l'intermédiaire d'un système de lentilles ou de miroirs ou d'une combinaison de ceux-ci, et l'application d'énergie est contrôlée par réglage du système de lentilles ou de miroirs.

5. Procédé selon l'une des revendications 1 à 4, **caractérisé en ce que** l'application d'énergie s'effectue avec au moins deux lasers ou sources infrarouges, de sorte que l'on utilise au moins un procédé à deux faisceaux.

6. Procédé selon l'une des revendications 1 à 5, **caractérisé en ce que** l'application d'énergie est contrôlée par une modification de la fréquence et/ou de la longueur d'onde de l'application d'énergie.

7. Procédé selon l'une des revendications 1 à 6, **caractérisé en ce que** l'on pose un masque sur la ligne de séparation ou ligne destinée à la rupture devant être créée, et l'application d'énergie est contrôlée par modification ou déplacement du masque.

8. Procédé selon l'une des revendications 1 à 7, **caractérisé en ce que** sur l'élément de construction, au moins une zone est recouverte d'une couche d'un matériau présentant la même capacité d'absorption que le matériau de l'élément de construction lui-même ou une capacité d'absorption différente, et l'application d'énergie est contrôlée par le biais de la capacité d'absorption de la couche.

9. Procédé selon l'une des revendications 1 à 8, **caractérisé en ce que** l'application d'énergie est contrôlée par des distances identiques ou différentes variables entre la ligne de séparation ou ligne destinée à la rupture, devant être créée, de l'élément de construction et la source d'énergie.

10. Procédé selon l'une des revendications 1 à 9, **caractérisé en ce que** l'application d'énergie agit sur le substrat depuis un ou plusieurs côtés.

11. Procédé selon l'une des revendications 1 à 10, **caractérisé en ce que** l'application d'énergie d'au moins une source d'énergie utilisée est répartie de façon symétrique ou asymétrique ou avec une combinaison des deux.
